# EUROPÄISCHE PATENTANMELDUNG

(11) **EP 1 084 807 A2**
(43) Veröffentlichungstag der Anmeldung: **21.03.2001**
(21) Anmeldenummer: 00113751.2
(22) Anmeldetag: 29.06.2000
(51) Int. Cl.: B28B 13/04, B28B 11/24, F27D 5/00, B65G 49/08

(54) **Transportvorrichtung für zu trocknende keramische Gegenstande, wie zum Beispiel Ziegelformlinge**

(30) Priorität: 18.09.1999 DE 19944825
(71) Anmelder: Hans Lingl Anlagenbau und Verfahrenstechnik GmbH & Co. KG, D-89231 Neu-Ulm (DE)
(72) Erfinder: Liedel, Karl, 86381 Krumbach/Niederraunau (DE)

(57) **Zusammenfassung**

Die vorliegende Erfindung betrifft eine Transportvorrichtung (1) zum Transport von zu trocknenden keramischen Gegenständen, wie zum Beispiel Ziegelformlingen oder dergleichen, mit einer Unterlage für die zu trocknenden Gegenstände, die den größtmöglichen Durchtritt von Trockenluft ermöglicht, und einen Rahmen mit die Unterlage zumindest teilweise umgebenden Seitenwänden (2, 3, 4, 5) zum Führen von Trockenluft entlang der zu trocknenden Gegenstände während des Trocknungsvorganges, wobei die Unterlage von mindestens zwei stangenförmigen Elementen (6) zum Absetzen einer Reihe zu trocknender Gegenstände aufweist, und die stangenförmigen Elemente (6) in einem Abstand zueinander und abnehmbar in dem Rahmen gehalten sind. Die vorliegende Erfindung betrifft weiterhin ein entsprechendes Transportsystem für die zu trocknenden keramischen Gegenstände.

Die vorliegende Erfindung ermöglicht das Einsetzen von zu trocknenden keramischen Gegenständen in eine Transportvorrichtung bzw. die Entnahme der getrockneten Gegenstände aus der Transportvorrichtung, ohne daß diese berührt werden müssen, wodurch Beschädigungen vermieden werden.

## Beschreibung

Die vorliegende Erfindung betrifft eine Vorrichtung zum Transportieren von zu trocknenden keramischen Erzeugnissen, wie zum Beispiel Ziegelformlingen oder dergleichen.

Beim Trocknen von keramischen Gegenständen mit kurzen Trockenzeiten, wie zum Beispiel Lochziegel oder dergleichen, wird eine Trocknerstation mit selbstfahrenden oder durch Rollenbahnen unterstützte Transportvorrichtung beschickt, auf denen die zu trocknenden Gegenstände aufliegen. Die Transportvorrichtungen, die in der Regel als Kassetten bezeichnet werden, umfassen eine Unterlage für die zu trocknenden Gegenstände, wobei die Unterlage Öffnungen zum Durchtritt von Trockenluft aufweist, und einen Rahmen mit der Unterlage zumindest teilweise umgebenden Seitenwänden zum Führen der Trockenluft entlang der zu trocknenden Gegenstände während des Trocknungsvorganges. Die Seitenwände dienen zur Luftführung in der Trocknerstation, um sicherzustellen, daß die Trockenluft das Trockengut, das heißt, die zu trocknenden Gegenstände, in gerichteter Weise und gegebenenfalls die durchgehenden Öffnungen bzw. Hohlräume in dem Trockengut durchströmt. Die Unterlage der Transportvorrichtungen bzw. Kassetten ist üblicherweise durch einen mit dem Rahmen fest verbundenen Rostboden gebildet, auf dem die zu trocknenden Gegenstände abgesetzt sind.

Aus der europäischen Patentanmeldung EP 0 674 146 A1 ist die Verwendung von Transportwagen bekannt, die auf Schienen in mehreren Etagen durch eine Trocknerstation geschoben werden. Diese Transportwagen weisen einen durch Seitenwände gebildeten geschlossenen und kastenartigen Rahmen auf, der ein fest verbundenes Rost aus hochgestellten Flacheisen-Profilstäbe umgibt. Die Transportwagen nehmen jeweils eine Lage von Lochziegeln auf, die mit ihren Löchern in vertikaler Anordnung auf den Rost gestellt werden. Die vertikal strömende Trockenluft durchsetzt im Trockner die Löcher der Lochziegel und streicht auch an den Außenflächen der Lochziegel vorbei, wodurch eine effektive Trocknung ermöglicht ist. Ein ähnlicher, jedoch einetagiger Trockner ist in der LINGL-Broschüre 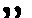 information 97/98" der Fa. Hans Lingl Anlagenbau und Verfahrenstechnik GmbH & Co. KG beschrieben.

Bei diesen aus dem Stand der Technik bekannten Transportvorrichtungen für zu trocknende keramische Gegenstände, wie zum Beispiel Ziegelformlinge, vor allem mit Lochanteilen oder dergleichen, ist es nachteilig, daß die zu trocknenden Gegenstände (Ziegelformlinge) unter direkter Berührung geklemmt bzw. untergriffen und mit oder ohne Hilfe eines Stempels auf den Rostboden der Transportvorrichtung (Kassette) abgesetzt werden. Das ist insbesondere bei porosierten oder Gitterziegel mit sehr dünnen Stegen problematisch. Nachteilig ist weiterhin, daß die Roststäbe starr in den Rahmen der Transportvorrichtung eingeschweißt sind und nur eine sehr schmale Auflagefläche bieten, so daß der Flächendruck hoch ist, die noch feuchten Ziegelformlinge einsinken und bei der während des Trocknens autretenden Schwindung reißen bzw. deformiert werden können.

Die Aufgabe der vorliegenden Erfindung ist daher, eine Transportvorrichtung für zu trocknende keramische Gegenstände, wie zum Beispiel Ziegelformlinge, vor allem mit hohen Lochanteilen oder dergleichen, gemäß dem Oberbegriff des Anspruches 1 und ein Transportsystem gemäß Anspruch 4 zu schaffen, bei dem ein einfaches und schonendes Absetzen von zu trocknenden keramischen Gegenständen auf die Unterlage der Transportvorrichtung ermöglicht ist.

Diese Aufgabe wird durch eine Transportvorrichtung für zu trocknende keramische Gegenstände gemäß Anspruch 1 gelöst, die dadurch gekennzeichnet ist, daß die Unterlage mindestens zwei stangenförmige Elemente zum Absetzen der zu trocknenden Gegenstände aufweist, wobei die stangenförmigen Elemente in einem Abstand zueinander und abnehmbar in dem Rahmen gehalten sind.

Durch die abnehmbare Ausbildung der stangenförmigen Elemente, auf denen die zu trocknenden keramischen Gegenstände abgesetzt werden, ist ein Umsetzen der zu trocknenden keramischen Gegenstände in die Transportvorrichtung möglich, ohne daß die zu trocknenden keramischen Gegenstände direkt berührt oder ergriffen werden müssen. Hierdurch wird eine Beschädigung der noch feuchten Formlinge vermieden. Auch nach dem erfolgten Trocknen der keramischen Gegenstände ist das von Vorteil, da die getrockneten Gegenstände wieder ohne direkte Berührung aus der Transportvorrichtung entnommen werden können. Weiterhin erlaubt die Ausbildung der Unterlage mit mindestens zwei stangenförmigen Elementen das einfache Aufsetzen von zu trocknenden keramischen Gegenständen beispielsweise mittels Riemenbahnen oder dergleichen. Zusätzlich können Beschädigungen der Gegenstände infolge der bei der Trocknung auftretenden Schwindung vermieden werden.

Die obige Aufgabe wird weiterhin durch ein Transportsystem gemäß Anspruch 4 gelöst. Vorteilhafte Ausgestaltungen sind in den jeweiligen Unteransprüchen angegeben.

Vorteilhafterweise weist der Rahmen der Transportvorrichtung Auflagen auf, auf denen die stangenförmigen Elemente abnehmbar aufliegen. Hierdurch werden Beschädigungen der Gegenstände infolge der beim Trocknen auftretenden Schwindung vermieden, da die stangenförmigen Elemente auf den Auflagen beweglich sind und Materialbewegungen kompensiert werden können. Hierdurch ist in einfacher Weise ein einfaches Einsetzen und Entfernen der Unterlage aus dem Rahmen ermöglicht. Weiterhin ist es von Vorteil, wenn sich die stangenförmigen Elemente im Wesentlichen zwischen zwei gegenüberliegenden Seitenwänden erstrecken. Hierdurch können die stangenförmigen Elemente jeweils einzeln und ohne Verbindung zueinander ausgebildet sein, was beim Absetzen der zu trocknenden Gegenstände von Vorteil ist. In diesem Fall bestehen die Auflagen vorteilhafterweise aus Auflagerändern, die von den zwei gegenüberliegende Seitenwänden nach innen ragen und auf denen die stangenförmigen Elemente abnehmbar aufliegen. Hierdurch ist ein sehr einfacher und leichter Aufbau der Transportvorrichtung ermöglicht.

Vorteilhafterweise weisen die stangenförmigen Elemente einen rechteckigen Querschnitt auf. Hierdurch kann die Auflagefläche der zu trocknenden Gegenstände auf den stangenförmigen Elementen in geeigneter Weise so angepaßt werden, daß der Flächendruck so niedrig ist, daß die zu trocknenden Gegenstände vor und während dem Trocknen weder beschädigt noch zerstört werden können.
Weiterhin ist es von Vorteil, wenn die stangenförmigen Elemente als Rohre ausgebildet sind. Hierdurch können die stangenförmigen Elemente sehr leicht gebaut werden, wodurch die Bewegung der stangenförmigen Elemente beim Einsetzen in die Transportvorrichtung auf einfache und energiesparende Weise möglich ist.

Das erfindungsgemäße System zum Transportieren von zu trocknenden keramischen Gegenständen, wie zum Beispiel Ziegelformlinge oder dergleichen, in einer erfindungsgemäßen Transportvorrichtung umfaßt eine Einrichtung zum Absetzen von zu trocknenden Gegenständen auf mindestens zwei in einem Abstand zueinander angeordnete stangenförmige Elemente, eine Einrichtung zum Einsetzen der stangenförmigen Elemente mit abgesetzten, zu trocknenden Gegenständen in den Rahmen der Transportvorrichtung, eine Einrichtung zum Bewegen der Transportvorrichtung durch eine Trocknerstation, in der Trockenluft in vertikaler Richtung durch die Transportvorrichtung und entlang der zu trocknenden Gegenstände geleitet wird, eine Einrichtung zum Entnehmen der stangenförmigen Elemente mit den aufgesetzten Gegenständen aus dem Rahmen der Transportvorrichtung, eine Einrichtung zum Abnehmen der getrockneten Gegenstände von den stangenförmigen Elementen und eine Einrichtung zum Zufähren stangenförmiger Elemente zur Absetzeinrichtung.

Vorteilhafterweise wird jeweils eine bestimmte Anzahl von stangenförmigen Elementen einer Reihe von zu trocknenden Gegenständen zugeordnet. Weiterhin ist es von Vorteil, wenn das Einsetzen der stangenförmigen Elemente mit den aufgesetzen, zu trocknenden Gegenstände in den Rahmen durch eine die stangenförmigen Elemente von unten untergreifenden Hebevorrichtung erfolgt. Dabei kann die Hebevorrichtung die stangenförmigen Elemente mittels Hebeelementen erfassen, die sich im wesentlichen quer zu den stangenförmigen Elementen erstrecken.

In der folgenden Beschreibung wird die vorliegende Erfindung anhand eines bevorzugten Ausführungsbeispiels in Bezug auf die beigefügten Zeichnungen näher erläutert, in denen zeigen:
- Figur 1 :: eine schematische Draufsicht auf ein Transportsystem gemäß der vorliegenden Erfindung;
- Figur 2 :: eine Seitenansicht eines Teils des in Figur 1 gezeigten Transportsystems gemäß der vorliegenden Erfindung, und
- Figur 3 :: eine perspektivische Ansicht einer Transportvorrichtung gemäß der vorliegenden Erfindung

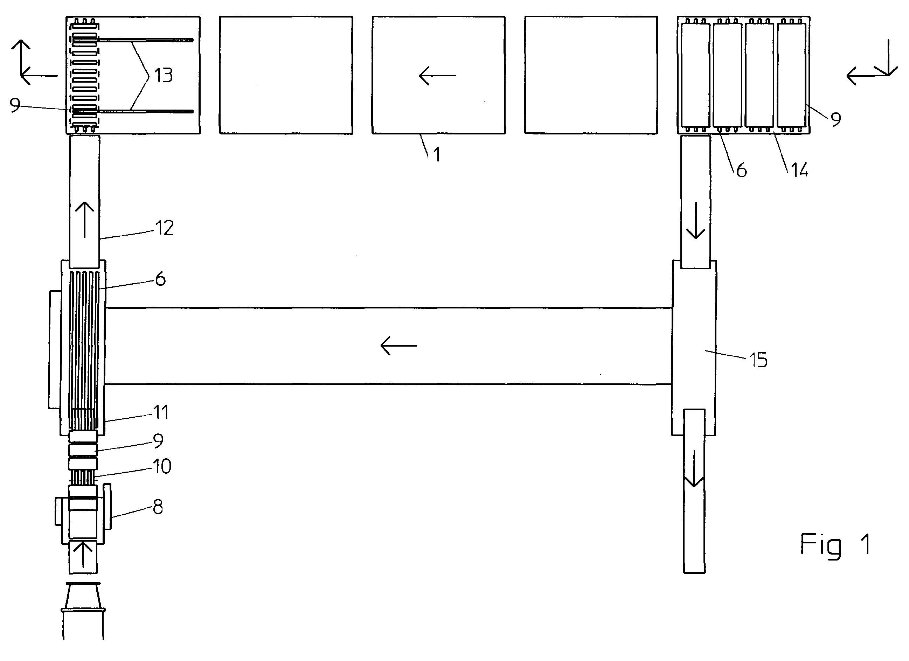

Figur 1 zeigt eine schematische Draufsicht auf ein System zum Transportieren von zu trocknenden keramischen Gegenständen, wie zum Beispiel Ziegelformlinge oder dergleichen, gemäß der vorliegenden Erfindung. Dabei werden aus einer Abschneidevorrichtung 8 kommende feuchte keramische Gegenstände, wie zum Beispiel Ziegelformlinge, wobei gelochte Ziegelformlinge mittels einer Kippvorrichtung 10 um 90° auf die Schnittfläche gedreht werden können, einer Absetzeinrichtung 11 zugeführt. In der Absetzeinrichtung 11 werden die Ziegelformlinge 9, die von der Abschneidevorrichtung 8 kommen, nacheinander in einer Reihe auf nebeneinander angeordnete stangenförmige Elemente 6 aufgelegt. Dabei werden die Ziegelformlinge 9 beispielsweise durch schmale Riemenbänder weitertransportiert, zwischen denen die stangenförmigen Elemente 6 von unten an jeweils eine Reihe Ziegelformlinge herangeführt werden und diese aufnehmen. Daraufhin werden die nebeneinander in einem Abstand angeordneten stangenförmigen Elemente 6 mit den abgesetzten, zu trocknenden Ziegelformlinge 9 über eine Transportbahn 12 einer Einhebevorrichtung 13 zugeführt. Die Einhebevorrichtung 13 dient zum Einsetzen der stangenförmigen Elemente 6 mit den abgesetzten, zu trocknenden Ziegelformlinge 9 in eine Transportvorrichtung, das heißt eine Kassette 1. Eine derartige Kassette ist beispielhaft in Figur 3 dargestellt.

Die Einhebevorrichtung 13 umfaßt parallel nebeneinander angeordnete Hebeelemente, die sich quer zur Bewegungsrichtung der Transportbahn 12 erstrecken. Die stangenförmigen Elemente 6 mit den abgesetzten, zu trocknenden Ziegelformlingen 9 werden auf die querliegenden Hebeelemente der Einhebevorrichtung 13 gefahren. Danach werden die Hebeelemente der Einhebevorrichtung 13 mit der ersten Reihe zu trocknender Ziegelformlinge quer zur Bewegungsrichtung der Transportbahn 12 verfahren, so daß eine nächste Reihe von zu trocknenden Ziegelformlingen auf den entsprechenden stangenförmigen Elementen 6 zugeführt werden kann. Sind so viele Reihen von zu trocknenden Ziegelformlingen 9 durch die Transportvorrichtung 12 zugeführt worden, wie eine Kassette aufnehmen kann, so wird der Rahmen der Kassette durch die Einhebevorrichtung von unten an die stangenförmigen Elemente 6 mit den daraufliegenden, zu trocknenden Ziegelformlingen 9 herangefahren, um diese aufzunehmen, oder die Einhebevorrichtung 13 setzt die stangenförmigen Elemente 6 mit den darauf liegenden Ziegelformlingen 9 in den Rahmen der Kassette 1 ab.

Daraufhin wird die Kassette mit den darin befindlichen zu trocknenden Ziegelformlingen durch eine entsprechende Bewegungseinrichtung durch eine Trocknerstation bewegt, in der Trockenluft in vertikaler Richtung durch die Kassette 1, das heißt durch die Abstände der stangenförmigen Elemente 6 und durch bzw. entlang der zu trocknenden Ziegelformlinge 9 geleitet. Diese Trocknerstation ist in Figur 1 nicht dargestellt. Nach dem Trocknen werden die getrockneten Ziegelformlinge 9 an einer Aushebevorrichtung 14 jeweils reihenweise mit den sie unterstützenden stangenförmigen Elementen 6 aus der Kassette 1 entnommen. Hier werden die stangenförmigen Elemente 6 für eine Reihe von Ziegelformlingen 9 jeweils unten ergriffen oder der Rahmen der Kassette 1 nach unten bewegt, so daß eine Reihe von Ziegelformlingen 9 mit den sie unterstützenden stangenförmigen Elementen 6 zu einer Abnahmeeinrichtung 15 bewegt werden kann, die die getrockneten Ziegelformlinge 9 und die stangenförmigen Elemente voneinander trennt. Die getrockneten Ziegel werden daraufhin einer weiteren Verarbeitung, wie beispielsweise dem Brennvorgang zugeführt, während die stangenförmigen Elemente 6 zurück zur Absetzeinrichtung 11 transportiert werden, an der neue zu trocknende Ziegelformlinge auf sie abgesetzt werden.

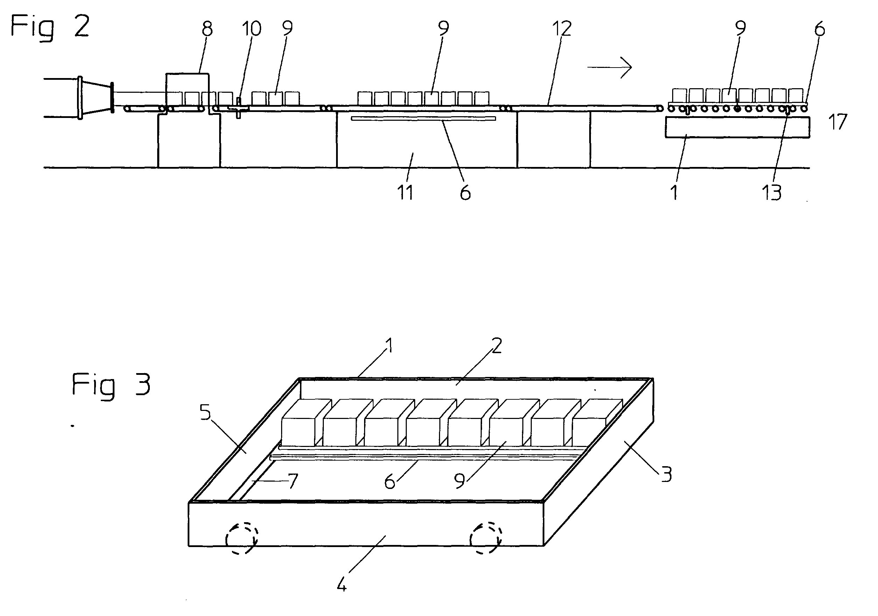

In Figur 2 ist eine schematische Seitenansicht eines Teils der in Figur 1 gezeigten Transportsystems dargestellt. Die von der Abschneidevorrichtung 8 kommenden geschnittenen und feuchten Ziegelformlinge 9 werden der Absetzeinrichtung 11 zugeführt, in der die stangenförmigen Elemente 6 von unten jeweils einer Reihe zu trocknende Ziegelformlinge 9 herangeführt werden. Im dargestellten Beispiel wird jeweil eine Reihe Ziegelformlinge 9 auf drei nebeneinander in einem Abstand angeordnete stangenförmige Elemente 6 abgesetzt. Die stangenförmigen Elemente 6 werden mit den abgesetzten, zu trocknenden Ziegelformlingen 9 über die Transportbahn 12 der Einhebevorrichtung 13 zugeführt, in der sie in den Rahmen der Kassette 1 zum Transportieren der Ziegelformlinge durch eine Trocknerstation eingesetzt werden.

In Figur 3 ist eine schematische Perspektivansicht einer Transportvorrichtung bzw. Kassette 1 zum Transport von zu trocknenden keramischen Gegenständen, wie zum Beispiel Ziegelformlinge 9 oder dergleichen, gemäß der vorliegenden Erfindung dargestellt. Die Kassette 1 umfaßt einen Rahmen mit Seitenwänden 2, 3, 4 und 5. Diese Seitenwände dienen zum Führen der Trockenluft entlang der zu trocknenden Ziegelformlinge während des Trocknungsvorganges in der Trocknerstation. Von zumindest zwei einander gegenüberliegenden Seitenwänden, im vorliegenden Beispiel von den Seitenwänden 3 und 5, ragen Auflagen 7 in Form von Auflagerändern nach innen. Die Auflagen 7 dienen zum Auflegen der stangenförmigen Elemente 6 mit aufgesetzten, zu trocknenden Ziegelformlingen 9. Die stangenförmigen Elemente 6 erstrecken sich dabei im wesentlichen über die gesamte Breite des Rahmens der Kassette 1, das heißt beispielsweise von der Seitenwand 3 bis zur Seitenwand 5.
Die in den Figuren 1 bis 3 gezeigten Beispiele dienen jeweils drei nebeneinanderliegende stangenförmige Elemente zum Absetzen einer Reihe zu trocknender Ziegelformlinge 9. Es können jedoch beispielsweise auch zwei, vier, fünf etc. stangenförmige Elemente 6 zum Absetzen der Ziegelreihen verwendet werden. Die stangenförmigen Elemente 6 liegen lose nebeneinander auf den gegenüberliegenden Auflagen 7 und können beispielsweise einen rechteckigen oder quadratischen Querschnitt aufweisen, so daß sie eine genügend große Auflagefläche für die Ziegelformlinge 9 bieten, um diese nicht zu beschädigen. Vorzugsweise sind die stangenförmigen Elemente 6 als Rohre ausgebildet, wodurch ihre Bewegung und Handhabbarkeit wesentlich erleichtert ist. Falls die zu trocknenden Ziegelformlinge mit durchgehenden Öffnungen gelocht sind, werden sie mit vertikal ausgerichteten Öffnungen auf die stangenförmigen Elemente 6 gelegt, so daß beim Durchfahren der Trocknerstation die Trocknungsluft durch die zwischen den stangenförmigen Elementen 6 gebildeten Öffnungen bzw. Schlitze vertikal auch durch die Öffnungen strömt.

## Patentansprüche

1. Transportvorrichtung (1) zum Transport von zu trocknenden keramischen Gegenständen, z.B. Ziegelformlinge oder dgl., mit einer Unterlage für die zu trocknenden Gegenstände, wobei die Unterlage Öffnungen zum Durchtritt von Trocknungsluft aufweist, und
einen Rahmen mit der Unterlage zumindest teilweise umgebenden Seitenwänden (2, 3, 4, 5) zum Führen der Trocknungsluft entlang der zu trocknenden Gegenstände während eines Trocknungsvorganges,
**dadurch gekennzeichnet ,**
daß die Unterlage mindestens zwei stangenförmige Elemente (6) zum Absetzen der zu trocknenden Gegenstände (9) aufweist, wobei die stangenförmigen Elemente (6) in einem Abstand zueinander und abnehmbar in dem Rahmen gehalten sind.

2. Transportvorrichtung gemäß Anspruch 1,
**dadurch gekennzeichnet ,**
daß der Rahmen Auflagen (7) aufweist, auf denen die stangenförmigen Elemente (6) abnehmbar aufliegen.

3. Transportvorrichtung gemäß Anspruch 1 oder 2,
**dadurch gekennzeichnet ,**
daß die Auflagen (7) aus Auflagerändern bestehen, die von den zwei einander gegenüberliegenden Seitenwänden nach innen ragen und denen die stangenförmigen Elemente (6) abnehmbar aufliegen.

4. Transportsystem zum Transportieren von zu trocknenden keramischen Gegenständen, z.B. Ziegelformlingen o.dgl. in einer Transportvorrichtung (1) gemäß einem der vorhergehenden Ansprüche, mit
- einer Einrichtung zum Aufsetzen von zu trocknenden keramischen Gegenständen auf mindestens zwei in einem Abstand zueinander angeordneten stangenförmigen Elemente,
- einer Einhebevorrichtung (13) zum Einsetzen der stangenförmigen Elemente mit den aufgesetzten zu trocknenden keramischen Gegenständen in den Rahmen der Transporteinrichtung,
- einer Einrichtung zum Bewegen der Transportvorrichtung durch einer Trocknerstation, in der Trocknungsluft in vertikaler Richtung durch die Transportvorrichtung und entlang der zu trocknenden keramischen Gegenständen geleitet wird,
- einer Einrichtung zum Entnehmen der stangenförmigen Elemente (6) mit den aufgesetzten getrockneten Gegenständen aus dem Rahmen der Transportvorrichtung,
- einer Einrichtung zum Abnehmen der getrockneten Gegenstände von den stangenförmigen Elementen, und
- einer Einrichtung zum Zuführen der stangenförmigen Elementen für ein erneutes Beladen mit zu trocknenden keramischen Gegenständen.

5. Transportsystem gemäß Anspruch 4,
**gekennzeichnet dadurch,**
daß jeweils eine bestimmte Anzahl von stangenförmigen Elementen (6) einer Reihe von zu trocknenden keramischen Gegenständen zugeordnet ist.

6. Transportsystem gemäß Anspruch 4 oder 5,
**gekennzeichnet dadurch,**
daß die Einhebevorrichtung (13) zum Einsetzen der stangenförmigen Elementen (6) mit aufgesetzten zu trocknenden Gegenständen in den Rahmen eine die stangenförmigen Elemente von unten untergreifenden Hebevorrichtung ist.

7. Transportsystem gemäß Anspruch 6,
**gekennzeichnet dadurch,**
daß die Einhebevorrichtung die stangenförmigen Elemente (6) mittels Hebeelementen erfaßt, die sich im wesentlichen quer zu den stangenförmigen Elementen erstrecken.
